# EUROPEAN PATENT SPECIFICATION

(11) **EP 4 111 284 B1**
(45) Date of publication and mention of the grant of the patent: **08.07.2026**
(21) Application number: 20707437.8
(22) Date of filing: 28.02.2020
(51) Int. Cl.: G05D 1/00

(54) **MANAGEMENT UNIT FOR MANAGING MATERIAL DUMPING, SYSTEM, AUTONOMOUS DUMP MACHINE AND METHOD**
VERWALTUNGSEINHEIT ZUR VERWALTUNG VON MATERIALLADEN, SYSTEM, AUTONOME KIPPMASCHINE UND VERFAHREN
UNITÉ DE GESTION POUR GÉRER UNE DÉCHARGE DE MATÉRIAU, SYSTÈME, MACHINE ET PROCÉDÉ DE DÉCHARGE AUTONOME

(43) Date of publication of application: 04.01.2023
(73) Proprietor: Volvo Autonomous Solutions AB, 405 08 Göteborg (SE)
(72) Inventor: SJÖBERG, Johan, 722 19 Västerås (SE); SKILLSÄTER, Calle, 644 36 Torshälla (SE)
(74) Representative: Valea AB
(86) International application number: PCT/EP2020/055260
(87) International publication number: WO 2021/170247

(56) References cited:
- US-A1- 2014 214 237
- US-A1- 2017 236 422
- US-A1- 2019 155 278

## Description

### TECHNICAL FIELD

The present invention relates to a management unit for managing material dumping in a dump area. Furthermore, the present invention relates to a system for material dumping in a dump area. Moreover, the present invention relates to an autonomous dump machine. Further, the present invention relates to a method for dumping material in a dump area.

The invention is applicable on working machines within the fields of industrial construction machines or construction equipment, in particular haulers. Although the invention will be described with respect to an autonomous hauler, the invention is not restricted to this particular machine, but may also be used in other working machines such as wheel loaders, excavators and backhoe loaders.

### BACKGROUND

A plurality of autonomous dump machines may be used for dumping material in a dump area. For instance, US 2018/0088591 A1 discloses a system for planning material dumping operations. The US 2018/0088591 A1 system is adapted to plan an array of dump locations. However, there is a risk that material dumped in the above-mentioned dump locations will result in that the dump area is not filled in a desired manner.

Document US2014/0214237 A1 discloses a control system for use with a machine. The control system may have a communicating device, a locating device configured to generate a first signal indicative of a location of the machine, a sensor configured to generate a second signal indicative of contact of the machine with a berm, and an onboard controller. The control system may also have an offboard controller configured to generate a first set of coordinates of a dump target, and to assign the first set of coordinates to the onboard controller for use in controlling the machine. The offboard controller may also be configured to detect contact of the machine with the berm based on the second signal during reverse travel toward the dump target, and to generate a second set of coordinates of the dump target to correspond with a location of the machine at a time of contact detection.

US 2017/0236422 A1 shows an obstacle avoidance system. On a basis of a relative position of an obstacle, a size of the obstacle in an own vehicle width direction and a width of the own vehicle, a maximum amount Dt of movement of the own vehicle in the vehicle width direction as required to avoid the obstacle is calculated. A point displaced over the maximum amount of movement toward a side of the adjacent lane from the relative position of the obstacle is determined as an avoiding point. If a distance d between the avoiding point and the adjacent lane is greater than the width Wm of the own vehicle, an avoiding path is generated for allowing the own vehicle to pass the avoiding point.

US 2019/0155278 A1 describes a safety system for a remotely operated work vehicle. The safety system works by continuously establishing a spatial relationship between the work vehicle and a wireless remote control unit, wherein at least part of the information needed to establish the spatial relationship is carried as data in signals. The established spatial relationship is then used to control the work vehicle.

### SUMMARY

An object of the present invention is to provide a management unit that improves filling of a dump area.

The above object is achieved by the management unit according to claim 1.

As such, as recited by appended claim 1, a first aspect of the present disclosure relates to a system for material dumping in a dump area comprising a management unit for managing material dumping in a dump area using a plurality of autonomous dump machines. Each autonomous dump machine comprises a sensor arrangement adapted to determine at least one sensor arrangement parameter indicative of the environment adjacent to at least a portion of the autonomous dump machine. The management unit is adapted to:
- establish a set of dump paths, comprising at least one dump path, wherein each dump path extends in the dump area,
- issue an instruction to an autonomous dump machine of the plurality of autonomous dump machines to follow a dump path of the set of dump paths until the sensor arrangement parameter, determined by the sensor arrangement of the autonomous dump machine, indicates that the autonomous dump machine has reached a dumping position indicative of a dumping density of the dump area being within a predetermined dumping density range.

By virtue of the management unit, which issues instructions to one or more autonomous dump machines, it is possible to control the autonomous dump machine so as to determine a suitable dumping position on the basis of the sensor arrangement parameter, rather than on a predetermined position alone. The autonomous dump machine may thereafter dump the material at the dumping position. Purely by way of example, the autonomous dump machine itself may take the decision to dump the material at the determined dumping position. As such, the management unit in accordance with the first aspect of the present invention implies that a dump area may be appropriately filled, such as more densely filled. Purely by way of example, the management unit may assure the dumping density of the dump area is within a predetermined dumping density range when the dumping operation has been completed. Once the autonomous dump machine has reached the dumping position, the autonomous dump machine may dump the carried material at the dumping position.

The management unit may comprise a data processing device and a memory having a computer program stored thereon, the computer program comprising program code which, when executed by the data processing device, causes the data processing device to issue the instruction, or command issuance of the instruction, to the autonomous dump machine. The computer program may further comprise program code which, when executed by the data processing device, causes the data processing device to perform, and/or command performance of, various steps as described herein. Furthermore, the management unit may be adapted to communicate with the plurality of autonomous dump machines, for instance using wireless communication means. The management unit may be adapted to be located at a work site, e.g. close to the dump area. Alternatively, the management unit may be adapted to be located remotely from the work site.

As used herein, the expression "dumping density" relates to the mass of the dumped material over a certain area. As such, the "dumping density" may be defined in terms of the unit mass/area - such as for instance kg/m² - and the above-mentioned predetermined dumping density range may be expressed as a range of x - y mass/area, such as X - Y kg/m², of dumped material.

Purely by way of example, the management unit according to the first aspect of the present invention, which issues the above-mentioned instruction, implies that a dump area for instance may be filled with inhomogeneous material whilst nevertheless enabling an appropriate filling of the dump area. Moreover, the management unit according to the first aspect of the present invention implies that an appropriate filling of the dump area may be obtained even if the autonomous dump machines are filled to different levels during the dumping procedure and/or if different types of autonomous dump machines are using in a dumping procedure.

Purely by way of example, the dump area may be defined by geographical boundaries and the system may be adapted to establish boundary information relating to the geographical boundaries of the dump area.

Optionally, the management unit is adapted to receive dump information from the autonomous dump machine relating to where the autonomous dump machine has dumped its load. Preferably the management unit is also adapted to receive shape information indicative of the shape of the load dumped by the autonomous dump machine. The management unit is further adapted to generate a dump map indicative of material currently dumped in the dump area on the basis of the received dump information, and optionally also on the basis of the shape information.

The information relating to the load dumped by the autonomous dump machine, such as the above-mentioned dump map, may be useful information when determining how to proceed with the dumping in the dump area.

Optionally, the management unit is adapted to determine a set of dump paths comprising at least one dump path on the basis of at least the dump map. As such, the management unit may be adapted to determine one or more dump paths in the dump area in an adaptive manner, taking information from the dump map into account. Such an adaptive path determination implies that dump area paths may be chosen in an appropriate manner.

Optionally, the management unit is adapted to determine a transversal dump path deviation threshold for a dump path. The transversal dump path deviation threshold is indicative of how much an autonomous dump machine is allowed to transversally deviate from the dump path in a direction towards an adjacent dump path. The management unit is adapted to determine the transversal dump path deviation threshold on the basis of the dump map.

Optionally, the management unit is adapted to set a first transversal dump path deviation threshold for a dump path based on a determination that the adjacent dump path is at least partially filled with material. Moreover, the management unit is adapted to set a second transversal dump path deviation threshold for a dump path based on a determination that the adjacent dump path is not filled with material. The first transversal dump path deviation threshold is greater than the second transversal dump path deviation threshold.

As such, the management unit may allow an autonomous dump machine to move closer to an adjacent dump path, assuming that the adjacent dump path is at least partially filled with material. This in turn implies that the autonomous dump machine may dump its load at a transversal location that is closer to the adjacent and at least partially filled dump path, as compared to a scenario in which the adjacent path is empty, which in turn implies an increased possibility to obtain a dumping density, also as seen in a transversal direction of a dumping path, within the predetermined dumping density range.

Optionally, the management unit is adapted to split the dump area into a plurality of adjacent dump paths, each dump path being associated with a dump path width profile such that the plurality of dump paths covers the dump area. This implies a possibility to plan the dumping in the dump area in an appropriate manner.

According to a first alternative recited by appended claim 1, the sensor arrangement parameter is indicative of a dump material height of dump material located in front of the autonomous dump machine, as seen along the dump path. The autonomous dump machine is adapted to determine that the autonomous dump machine has reached the dumping position in response to determining that the dump material height equals or exceeds a predetermined dump material height threshold value. The dump material height may be a useful parameter when determining where to dump a subsequent load.

Optionally, the dump path is associated with a dump path width profile. The autonomous dump machine is adapted to use sensor information from the sensor arrangement being related to, preferably limited to, information within the dump path width profile. Using sensor information related to information within the dump path width profile implies reduced risk in determining an appropriate dumping position on less relevant observations made by the sensor arrangement. Purely by way of example, using sensor information from the sensor arrangement being related to, preferably limited to, information within the dump path width profile implies a reduced risk for the autonomous dump machine to use sensor information relating to adjacent dump paths when determining an appropriate dumping position.

Optionally, the sensor arrangement is adapted to determine an inclination of the autonomous dump machine.

According to a second alternative recited by appended claim 1, the sensor arrangement is adapted to detect a pitch of the autonomous dump machine. The autonomous dump machine may in this case be adapted to determine that the autonomous dump machine has reached the dumping position in response to determining that the detected pitch equals or exceeds a predetermined pitch inclination threshold angle. A detected pitch that equals or exceeds a predetermined pitch inclination threshold angle may be indicative of the autonomous dump machine ascending a previously dumped pile of material. As such, the detected pitch may be useful information when determining the dumping position.

Optionally, the sensor arrangement is adapted to detect a roll of the autonomous dump machine. The autonomous dump machine is adapted to determine that the autonomous dump machine should discontinue following the dump path in response to determining that the detected roll equals or exceeds a predetermined roll inclination threshold angle. A detected roll that equals or exceeds a predetermined roll inclination threshold angle may imply that the ground on which the autonomous dump machine is travelling is too soft for the autonomous dump machine. As such, using the detected roll implies a reduced risk of the autonomous dump machine being stuck in a dump path.

Optionally, each autonomous dump machine of the plurality of autonomous dump machines is adapted to dump material carried by the autonomous dump machine at the dumping position, e.g. upon reaching the dumping position.

As recited by appended claim 6, a second aspect of the present invention relates to an autonomous dump machine comprising a sensor arrangement adapted to determine at least one sensor arrangement parameter indicative of the environment adjacent to at least a portion of the autonomous dump machine. The autonomous dump machine is adapted to receive information relating to a dump path forming part of a dump area intended to be filled with dump material. The autonomous dump machine is adapted to follow the dump path until the sensor arrangement parameter, determined by the sensor arrangement of the autonomous dump machine, indicates that the autonomous dump machine has reached a dumping position indicative of a dumping density of the dump area being within a predetermined dumping density range. The autonomous dump machine is further adapted to dump material carried by the autonomous dump machine at the dumping position.

According to a first alternative recited by appended claim 6, the sensor arrangement parameter is indicative of a dump material height of dump material located in front of the autonomous dump machine. The autonomous dump machine is adapted to determine that the autonomous dump machine has reached the dumping position in response to determining that the dump material height equals or exceeds a predetermined dump material height threshold value.

Optionally, the autonomous dump machine is adapted to receive information relating to a dump path width profile associated with the dump path. The autonomous dump machine is adapted to use sensor information from the sensor arrangement being related to, preferably limited to, information within the dump path width profile.

Optionally, the sensor arrangement is adapted to determine an inclination of the autonomous dump machine.

According to a second alternative recited by appended claim 6, the sensor arrangement is adapted to detect a pitch of the autonomous dump machine and the autonomous dump machine is adapted to determine that the autonomous dump machine has reached the dumping position in response to determining that the detected pitch equals or exceeds a predetermined pitch inclination threshold angle.

Optionally, the sensor arrangement is adapted to detect a roll of the autonomous dump machine and the autonomous dump machine is adapted to determine that the autonomous dump machine should discontinue following the dump path in response to determining that the detected roll equals or exceeds a predetermined roll inclination threshold angle.

Optionally, the sensor arrangement comprises a LIDAR sensor and/or a RADAR sensor. As another option, the sensor arrangement may comprise a camera.

According to the present disclosure, the autonomous dump machine is adapted to detect, preferably using the sensor arrangement, whether or not a portion of the dump area located adjacent to the dump path, as seen in a transversal direction perpendicular to a path extension along the dump path, is filled with material.

According to the present disclosure, the autonomous dump machine is adapted to, in response to detecting that the portion of the dump area located adjacent to the dump path is filled with material, use the sensor arrangement for determining a dumping position in the transversal direction indicative of a dumping density of the dump area being within a predetermined dumping density range.

As recited by appended claim 10, a third aspect of the present invention relates to a method for dumping material in a dump area using a system comprising a management unit and a plurality of autonomous dump machines. Each autonomous dump machine comprises a sensor arrangement adapted to determine at least one sensor arrangement parameter indicative of the environment adjacent to at least a portion of the autonomous dump machine. The method comprises using the management unit for:
- establishing a set of dump paths, comprising at least one dump path, wherein each dump path extends in the dump area, and
- issuing an instruction to each autonomous dump machine of the plurality of autonomous dump machines to follow one of the dump paths until the sensor arrangement parameter, determined by the sensor arrangement, indicates that each autonomous dump machine has reached a dumping position indicative of a dumping density of the dump area being within a predetermined dumping density range, whereby the autonomous dump machine thereafter dumps material carried by the autonomous dump machine at the dumping position.

Optionally, the method further comprises receiving dump information from the autonomous dump machine relating to where the autonomous dump machine has dumped its load, preferably the method further comprises receiving from the autonomous dump machine shape information indicative of the shape of the load dumped by the autonomous dump machine. The method further comprises generating a dump map, using the management unit, indicative of material currently dumped in the dump area on the basis of the received information.

Optionally, the method further comprises determining a set of dump paths comprising at least one dump path on the basis of at least the dump map.

Optionally, the method further comprises comprising determining a transversal dump path deviation threshold for a dump path, the transversal dump path deviation threshold being indicative of how much an autonomous dump machine is allowed to transversally deviate from the dump path in a direction towards an adjacent path. The method comprises determining the transversal dump path deviation threshold on the basis of the dump map.

Optionally, the method further comprises setting a first transversal dump path deviation threshold for a dump path based on a determination that an adjacent dump path is at least partially filled with material, and setting a second transversal dump path deviation threshold for a dump path based on a determination that an adjacent dump path is not filled with material. The first transversal dump path deviation threshold is greater than the second transversal dump path deviation threshold.

Optionally, the method further comprises splitting the dump area into a plurality of adjacent dump paths, each dump path being associated with a path width profile such that the plurality of dump paths covers the dump area.

Optionally, each autonomous dump machine comprises a sensor arrangement adapted to determine at least one sensor arrangement parameter indicative of the environment adjacent to at least a portion of the autonomous dump machine.

According to a first alternative recited by appended claim 10, the sensor arrangement parameter is indicative of a dump material height of dump material located in front of the autonomous dump machine, the method comprising determining that the autonomous dump machine has reached the dumping position in response to determining that the dump material height equals or exceeds a predetermined dump material height threshold value.

Optionally, the dump path is associated with a dump path width profile, the method comprising using sensor information related to, preferably limited to, information within the dump path width profile.

Optionally, the sensor assembly is adapted to determine an inclination of the autonomous dump machine.

According to a second alternative recited by appended claim 10, the sensor arrangement is adapted to detect a pitch of the autonomous dump machine. The method comprises determining that the autonomous dump machine has reached the dumping position in response to determining that the detected pitch equals or exceeds a predetermined pitch inclination threshold angle.

Optionally, the sensor arrangement is adapted to detect a roll of the autonomous dump machine. The method comprises determining that the autonomous dump machine should not continue following the dump path in response to determining that the detected roll equals or exceeds a predetermined roll inclination threshold angle.

### BRIEF DESCRIPTION OF THE DRAWINGS

With reference to the appended drawings, below follows a more detailed description of embodiments of the invention cited as examples.

In the drawings:
Fig. 1 illustrates an embodiment of an autonomous dump machine,
Fig. 2 is a schematic top view of an autonomous dump machine and a dump path,
Fig. 3 is a schematic side view of an autonomous dump machine and a dump path,
Fig. 4 is a schematic side view of an autonomous dump machine and a dump path,
Fig. 5 is a schematic top view of an autonomous dump machine and a dump path,
Fig. 6 is a schematic top view of a system for material dumping,
Fig. 7 is a schematic illustration of a dump map, and
Fig. 8 is a schematic top view of a dump area.

### DETAILED DESCRIPTION

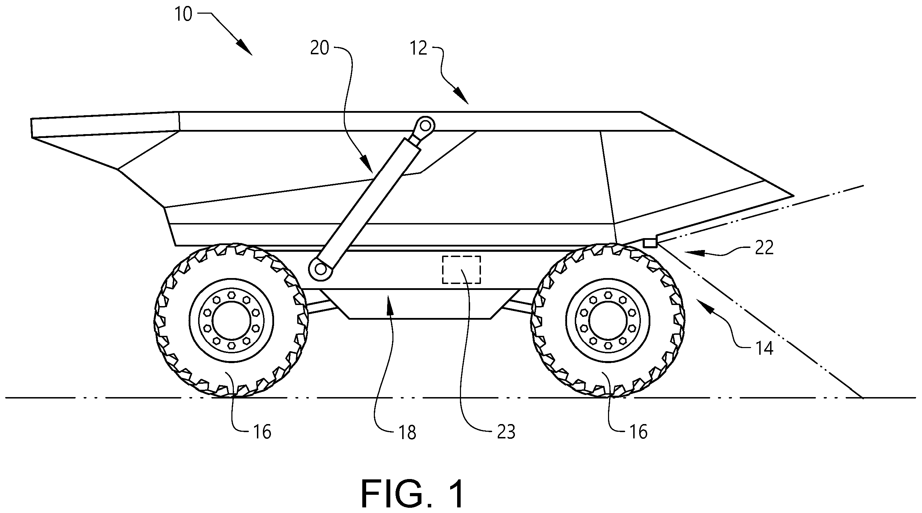

Fig. 1 illustrates an embodiment of an autonomous dump machine 10. The Fig. 1 autonomous dump machine 10 comprises a receptacle portion 12 for accommodating load. Purely by way of example, and as is indicated in Fig. 1, the receptacle portion 12 may be a loading platform of the autonomous dump machine 10.

The autonomous dump machine 10 further comprises a propulsion system 14 which in turn comprises one or more ground engaging members 16. In the Fig. 1 embodiment, the ground engaging members 16 are exemplified as wheels although other types of ground engaging members, such as crawlers (not shown) are also envisaged.

Furthermore, as indicated in Fig. 1, the autonomous dump machine 10 may comprise a machine frame 18 and a tipping system 20 for pivoting the receptacle portion 12 relative to the machine frame 18 to thereby allow material loaded in the receptacle portion 12 to be dumped. In the Fig. 1 embodiment, the tipping system 20 comprises a hydraulic actuator, more precisely a hydraulic cylinder, but it is also envisaged that that the tipping system 20 may comprise other components instead of, or in addition to, the hydraulic actuator. For instance, implementations of the tipping system 20 may comprise an electric motor (not shown).

Furthermore, as indicated in Fig. 1, the autonomous dump machine 10 comprises a sensor arrangement 22 adapted to determine at least one sensor arrangement parameter indicative of the environment adjacent to at least a portion of the autonomous dump machine 10. Purely by way of example, the sensor arrangement 22 may comprise a LIDAR sensor and/or a RADAR sensor. However, as will be discussed hereinbelow, the sensor arrangement 22 may comprise other types of sensors. Furthermore, the Fig. 1 embodiment of the autonomous dump machine 10 comprises a control unit 23, preferably an electronic control unit, for controlling the autonomous dump machine 10. Purely by way of example, the control unit 23 may be adapted to receive signals from the sensor arrangement 22 and from external entities, such as a management unit as will be discussed hereinbelow. As a non-limiting example, the control unit 23 may also be adapted to send signals. Where it is stated in the below description that the autonomous dump machine 10 is adapted to carry out certain operations, it should be understood that the autonomous dump machine 10 could carry out such operations using its control unit 23 for example.

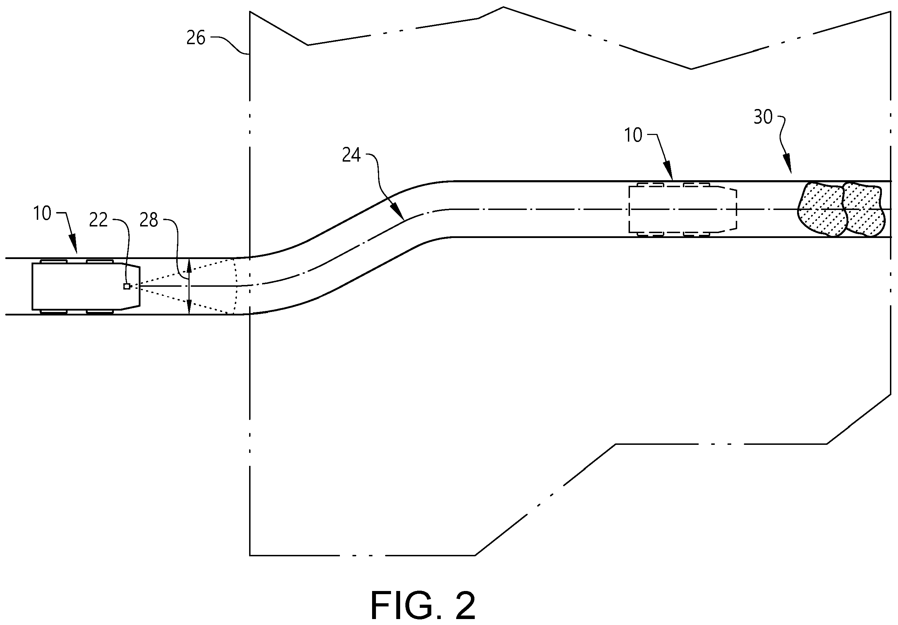

With reference to Fig. 2, the autonomous dump machine is adapted to receive information relating to a dump path 24 forming part of a dump area 26 intended to be filled with dump material. As is indicated in Fig. 2, each one of the dump area 26 and the dump path 24 may have any shape. In other words, the dump path 24 need not be a straight line and the dump area 26 need not be expressed as a basic shape, such as a rectangle or the like.

Purely by way of example, and as indicated in Fig. 2, the autonomous dump machine 10 may be adapted to receive information relating to a dump path width profile 28 associated with the dump path 24. In the Fig. 2 example, the dump path width profile 28 relates to a single width along the dump path 24. However, it is also envisaged that the dump path width profile 28 may be such that the width can vary along the dump path 24. As such, the dump path 24 may comprise information indicative of a centre line along which the autonomous dump machine 10 should travel. As a non-limiting example, the dump path width profile 28 may be selected so as to be associated with, preferably so as to substantially correspond to, the width of the autonomous dump machine 10.

Moreover, again purely by way of example, the autonomous dump machine 10 may be adapted to use sensor information from the sensor arrangement 22 being related to, preferably limited to, information within the dump path width profile 28. As such, with reference to Fig. 2, the autonomous dump machine 10 may be adapted to only use sensor information that is related to objects that are located within the dump path width profile 28. As a non-limiting example, such a relation or limitation may be achieved by altering the field-of-view of the sensor arrangement 22 in dependence on a determined dump path width profile 28. As another non-limiting example, the autonomous dump machine 10 may be adapted to receive sensor information from the sensor arrangement 22, including sensor information relating to areas outside the dump path width profile 28, but the autonomous dump machine 10 may be adapted to discard sensor information deemed to be related to areas outside the dump path width profile 28.

Furthermore, the autonomous dump machine 10 is adapted to follow the dump path 24 until the sensor arrangement parameter, determined by the sensor arrangement 22 of the autonomous dump machine, indicates that the autonomous dump machine 10 has reached a dumping position indicative of a dumping density of the dump area being within a predetermined dumping density range.

An example of such a dumping position is indicated by the dashed line in Fig. 2 indicating a future position of the autonomous dump machine 10. In the Fig. 2 example, and as recited by each one of the appended independent claims, the dumping position was determined in response to the sensor arrangement 22 detecting an entity 30, such as pile, of previously dumped material along the dump path 24.

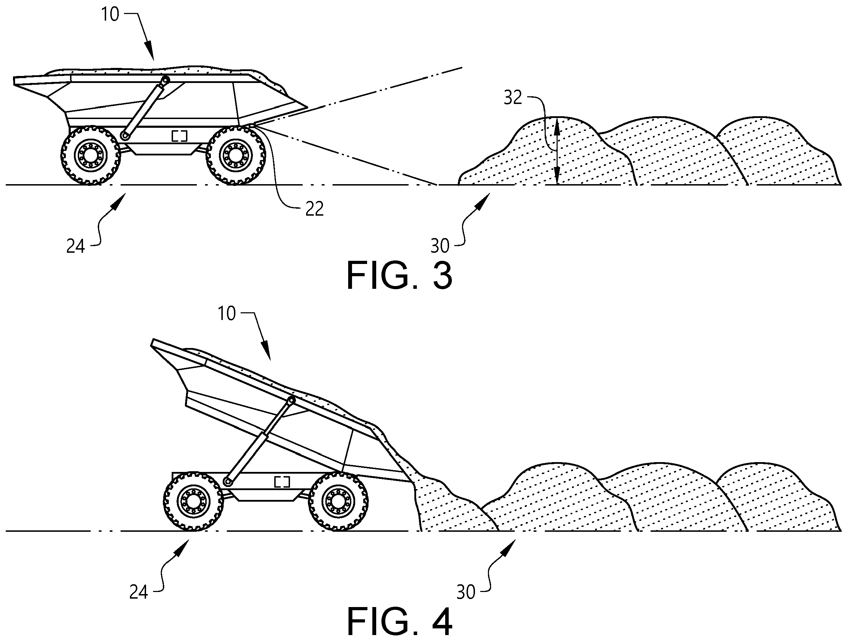

To this end, with reference to Fig. 3, as recited as a first alternative by each one of the appended independent claims, the sensor arrangement parameter may be indicative of a dump material height 32 of dump material 30 located in front of the autonomous dump machine 10. As such, the autonomous dump machine 10 may be adapted to determine that the autonomous dump machine 10 has reached the dumping position in response to determining that the dump material height 32 equals or exceeds a predetermined dump material height threshold value. To this end, the sensor arrangement 22 may comprise a sensor component, such as a GPS system, for determining the position of the autonomous dump machine 10.

As another non-limiting example, the sensor arrangement parameter may be indicative of the autonomous dump machine 10 reaching the end of the dump path 24. Thus, when an autonomous dump machine 10 follows a dump path 24 that has not yet been filled with material (since the sensor arrangement has not discovered any dumped material along the dump path 24), the autonomous dump machine 10 may be adapted to proceed as long as possible along the dump path 24 and thereafter dump the material at the end thereof.

As yet another non-limiting example, although not covered by the appended claims, the sensor arrangement parameter may be indicative of an edge in the dump path 24. For example, the sensor arrangement parameter may be indicative of an edge associated with a downwardly extending slope after the edge and in response thereto determining that the autonomous dump machine 10 has reached a dumping position indicative of a dumping density of the dump area being within a predetermined dumping density range.

Furthermore, the sensor arrangement 22 may be adapted to determine an inclination of the autonomous dump machine 10.

As a non-limiting example, as recited as a second alternative by each one of the appended independent claims, the sensor arrangement 22 may be adapted to detect a pitch of the autonomous dump machine 10. As used herein, the term "pitch" relates to an inclination angle of the autonomous dump machine 10 around an axis extending parallelly to a transversal axis of the autonomous dump machine 10.

Moreover, the autonomous dump machine 10 may be adapted to determine that the autonomous dump machine has reached the dumping position in response to determining that the detected pitch equals or exceeds a predetermined pitch inclination threshold angle. As such, again with reference to Fig. 2, when the autonomous dump machine 10 reaches a previously dumped entity 30, such as pile, the autonomous dump machine 10 will begin to ascend such an entity 30 resulting in an increased pitch of the autonomous dump machine 10. When the detected pitch equals or exceeds a predetermined pitch inclination threshold angle, it can be determined that the autonomous dump machine 10 has ascended the dumped material entity 30 to such an extent that dumping material from the autonomous dump machine 10 in such a position would result in an appropriate material filling.

As another non-limiting example, the sensor arrangement 22 may be adapted to detect a roll of the autonomous dump machine 10. As used herein, the term "roll" relates to an inclination angle of the autonomous dump machine 10 around an axis extending parallelly to a longitudinal axis L of the autonomous dump machine 10. The autonomous dump machine 10 may be adapted to determine that the autonomous dump machine 10 should discontinue following the dump path 24 in response to determining that the detected roll equals or exceeds a predetermined roll inclination threshold angle.

A detected roll that equals or exceeds a predetermined roll inclination threshold angle can imply that the autonomous dump machine 10 travels on a ground that is too soft for the autonomous dump machine 10. As such, the autonomous dump machine 10 may decide not to continue on the dump path 24 in response to determining that the detected roll equals or exceeds the predetermined roll inclination threshold angle.

Irrespective of how it is determined that the autonomous dump machine 10 has reached a dumping position indicative of a dumping density of the dump area 26 being within a predetermined dumping density range, the autonomous dump machine 10 is further adapted to dump material carried by the autonomous dump machine 10 at the dumping position. This is schematically illustrated in Fig. 4.

Moreover, the autonomous dump machine 10 may be adapted to detect, preferably using the sensor arrangement 22, whether or not a portion of the dump area 26 located adjacent to the dump path 24, as seen in a transversal direction T perpendicular to a path extension along the dump path, is filled with material.

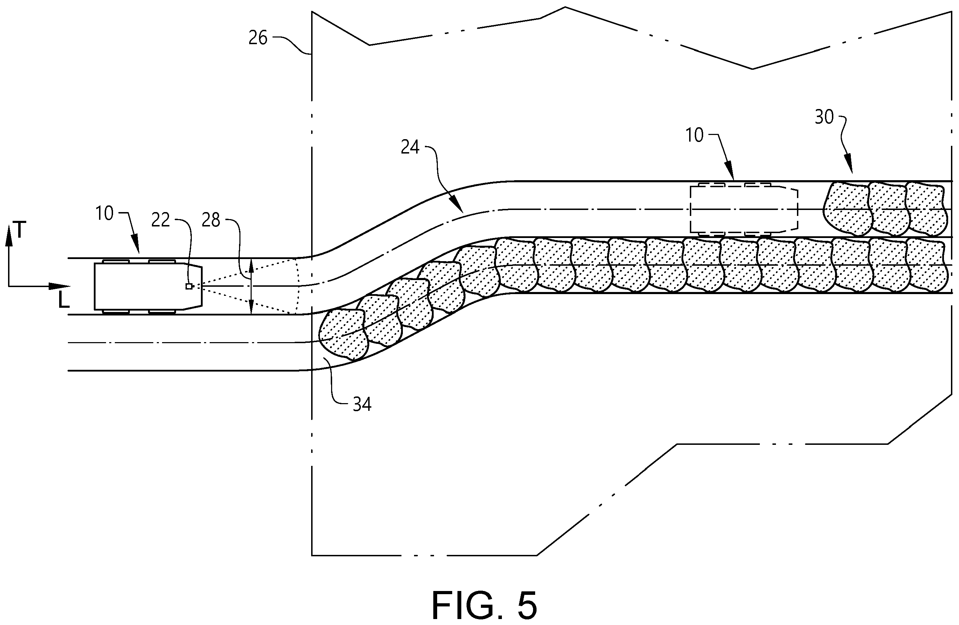

To this end, reference is made to Fig. 5 illustrating a scenario in which a previous dump path 34 has been filled with material and wherein the autonomous dump machine 10 is adapted to follow a current dump path 24. The autonomous dump machine 10 may be adapted to, in response to detecting that the portion of the dump area located adjacent to the dump path 24 is filled with material, use the sensor arrangement 22 for determining a dumping position in the transversal direction T indicative of a dumping density of the dump area being within a predetermined dumping density range.

Put differently, the autonomous dump machine 10 may be adapted to, in response to detecting that the portion of the dump area located adjacent to the dump path 24 is filled with material, move towards the previous dump path 34 in order to arrive at a dumping position in the transversal direction T indicative of a dumping density of the dump area being within a predetermined dumping density range.

As such, the autonomous dump machine 10 may be such that it departs from the current dump path 24, as seen in the transversal direction T, and approaches a transversally adjacent and already filled portion of the dump area 26 before dumping its material.

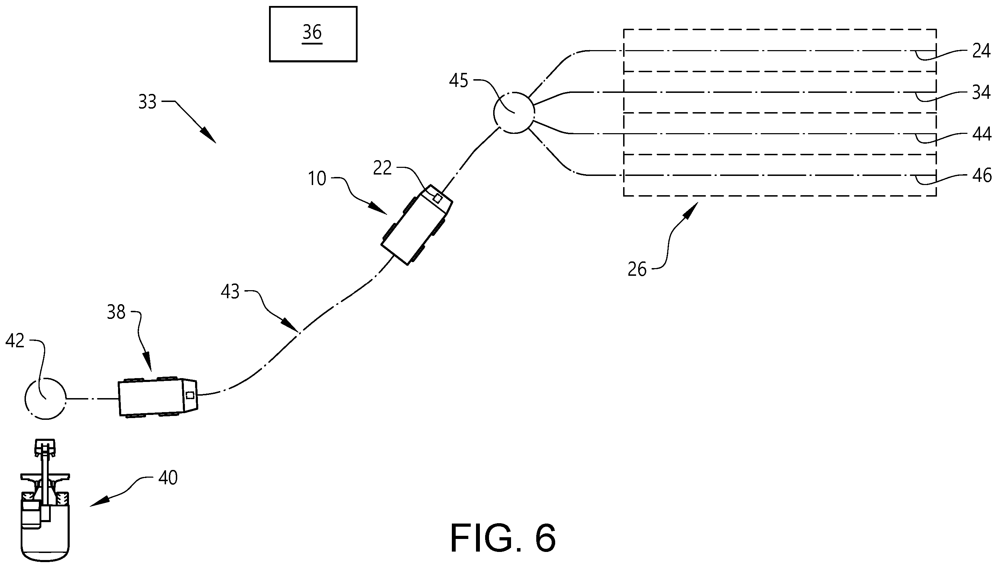

Fig. 6 illustrates a system 33 comprising a management unit 36 for managing material dumping in a dump area 26 using a plurality of autonomous dump machines 10, 38. Purely by way of example, and as indicated in Fig. 6, the dump area 26 may be defined by geographical boundaries and the system 33 may be adapted to establish boundary information relating to the geographical boundaries of the dump area 26.

Each one of the autonomous dump machines 10, 38 may be in accordance with any one of the above discussed embodiments of the autonomous dump machine 10.

Moreover, Fig. 6 further illustrates a working machine 40 - which in Fig. 6 is implemented as an excavator - which is adapted to fill each one of the autonomous dump machines 10, 38 with material at a loading zone 42.

Fig. 6 further illustrates that the autonomous dump machines 10, 38 may be adapted to follow a common path 43 towards an intersection 45 located adjacent to the dump area 26. After the intersection 45, the autonomous dump machines 10, 38 travel towards a dump path 24, 34, 44, 46 in the dump area 26 as will be discussed hereinbelow.

The management unit 36 may be adapted to communicate with each one of the autonomous dump machines 10, 38. Purely by way of example, the management unit 36 may be adapted to wirelessly communicate with each one of the autonomous dump machines 10, 38. Furthermore, as another non-limiting example, the management unit 36 may be adapted to receive information, also for instance by means of wireless communication means, from each one of the autonomous dump machines 10, 38.

The management unit 36 is adapted to establish a set of dump paths 24, 34, 44, 46, wherein each dump path extends in the dump area 26. In the Fig. 6 embodiment, each one of the dump paths 24, 34, 44, 46 is a straight path and the dump area 26 is rectangular. However, in other embodiments, the dump area 26 may have an irregular shape and/or the dump paths 24, 34, 44, 46 need not necessarily be straight.

Furthermore, the management unit 36 is adapted to issue an instruction to an autonomous dump machine 10 of the plurality of autonomous dump machines 10, 38 to follow a dump path 24 of the set of dump paths 24, 34, 44, 46 until the sensor arrangement parameter, determined by the sensor arrangement 22 of the autonomous dump machine 10, indicates that the autonomous dump machine 10 has reached a dumping position indicative of a dumping density of the dump area being within a predetermined dumping density range. The autonomous dump machine 10 thereafter dumps material carried by the autonomous dump machine 10 at the dumping position.

In this example, the autonomous dump machine 10 sends dump information to the management unit 36 relating to where the autonomous dump machine has dumped its load. As such, though purely by way of example, when the autonomous dump machine 10 is dumping material or just has dumped material, it may issue a signal indicative of its position to the management unit 36.

Preferably the management unit 36 is also adapted to receive shape information indicative of the shape of the load dumped by the autonomous dump machine 10. To this end, the previously discussed sensor arrangement 22 may be used for determining the shape of the load just dumped by the autonomous dump machine 10 and such information may be sent from the autonomous dump machine 10 to the management unit 36.

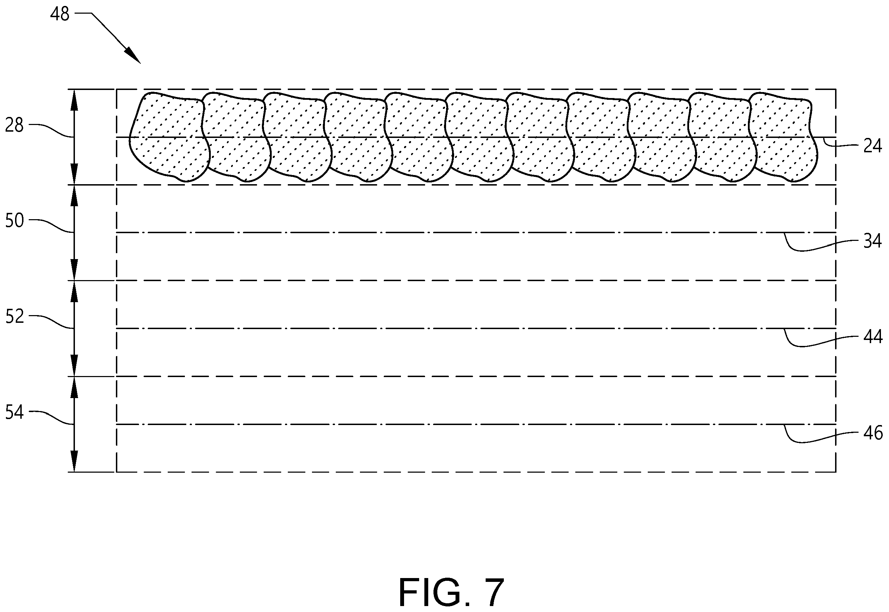

The management unit 36 may further be adapted to generate a dump map 48 indicative of material currently dumped in the dump area on the basis of the received information. Fig. 7 illustrates an implementation of a dump map 48.

The Fig. 7 implementation of the dump map 48 indicates that a first dump path 24 has been filled with material. Purely by way of example, the management unit 36 may be adapted to determine a set of dump paths comprising at least one dump path on the basis at least the dump map 48. Moreover, though purely by way of example, the management unit 36 may be adapted to determine a set of dump paths comprising at least one dump path on the basis of at least the dump map 48 as well as on the basis of the boundary information relating to the geographical boundaries of the dump area 26 as have been mentioned hereinabove.

As such, on the basis of the dump map, the management unit 36 may be adapted to determine additional dump paths. Thus, the management unit 36 may be adapted to operate in an adaptive manner and generate and/or update the set of dump paths 24, 34, 44, 46 on the basis of information obtained from a recent dump map.

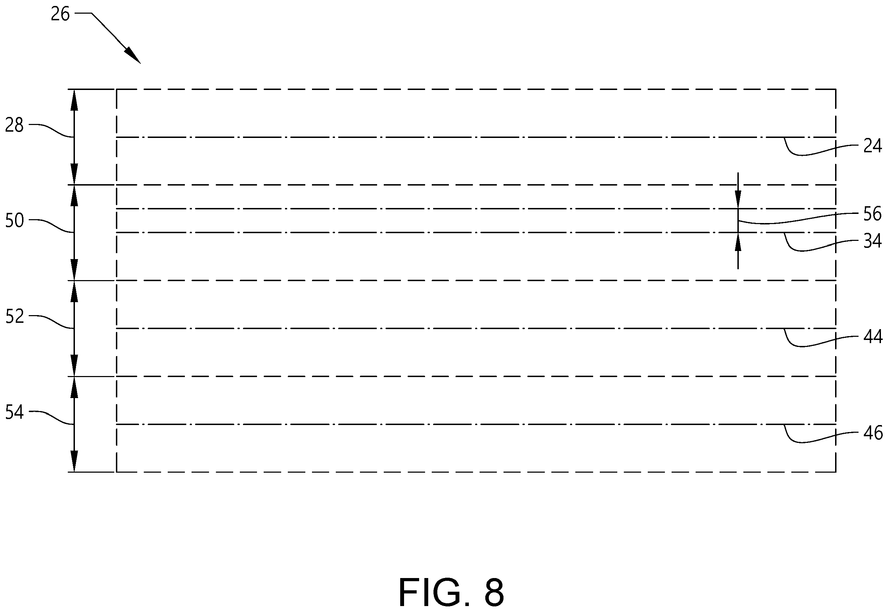

Fig. 8 illustrates a dump area 26 that has been generated using another embodiment of the management unit 36 or using another functionality of a management unit 36. In Fig. 8, the management unit 36 may be adapted to split the dump area 26 into a plurality of adjacent dump paths 24, 34, 44, 46, wherein each dump path is associated with a dump path width profile 28, 50, 52, 54 such that the plurality of dump paths 24, 34, 44, 46 covers the dump area 26. As a non-limiting example, the management unit 36 may be adapted to split the dump area 26 into a plurality of adjacent dump paths 24, 34, 44, 46 before any material has been filled into the dump area.

Moreover, as indicated in Fig. 8, the management unit 36 may be adapted to determine a transversal dump path deviation threshold 56 for a dump path 34. In the Fig. 8 example, the transversal dump path deviation threshold 56 is indicated for a second dump path 34 in a dump area 26.

The transversal dump path deviation threshold 56 is indicative of how much an autonomous dump machine is allowed to transversally deviate from the dump path 34 in a direction towards an adjacent path. The adjacent path is in Fig. 8 exemplified as a first dump path 24. Moreover, the management unit 36 is adapted to determine the transversal dump path deviation threshold 56 on the basis of the dump map 48, such as the dump map 48 that has been discussed hereinabove with reference to Fig. 7.

Moreover, the management unit 36 may be adapted to set a first transversal dump path deviation threshold for a dump path based on a determination that the adjacent dump path is at least partially filled with material. Moreover, the management unit 36 may be adapted to set a second transversal dump path deviation threshold for a dump path based on a determination that the adjacent dump path is not filled with material. The first transversal dump path deviation threshold is greater than the second transversal dump path deviation threshold.

Thus, using Fig. 7 and Fig. 8 as examples, when the first dump path 24 is filled with material, such a condition is indicated in Fig. 7, the management unit 36 sets a first transversal dump path deviation threshold for the second dump path 34 to thereby allow an autonomous dump machine 10, 38 to move in a transversal direction T from the second dump path 34 towards the first dump path 24 before dumping the loaded material.

However, in a condition in which the first dump path 24 is not filled with material, the management unit 36 sets a second transversal dump path deviation threshold for the second dump path 34, the second transversal dump path deviation threshold is smaller than the first transversal dump path deviation threshold which may thus prevent an autonomous dump machine 10, 38 from moving too much in the transversal direction T towards the first dump path 24.

It should be noted that the above presentation of the management unit 36 and the system 33 comprising the management unit 36 and a plurality of autonomous dump machines 10, 38 should also be regarded as disclosing a method for dumping material in a dump area using a system 33 comprising a management unit 36 and a plurality of autonomous dump machines 10, 38.

It is to be understood that the present invention is not limited to the embodiments described above and illustrated in the drawings; rather, the skilled person will recognize that many changes and modifications may be made within the scope of the appended claims.

## Claims

1. A system (33) for material dumping in a dump area (26), said system (33) comprising a plurality of autonomous dump machines (10, 38) and a management unit (36) for managing material dumping in said dump area (26) using said plurality of autonomous dump machines (10, 38), each autonomous dump machine (10, 38) comprising a sensor arrangement (22) adapted to determine at least one sensor arrangement parameter indicative of the environment adjacent to at least a portion of said autonomous dump machine (10, 38), wherein said management unit (36) is adapted to:
∘ establish a set of dump paths (24, 34, 44, 46), comprising at least one dump path (24), wherein each dump path (24, 34, 44, 46) extends in said dump area (26) intended to be filled with dump material, and
∘ issue an instruction to an autonomous dump machine (10) of said plurality of autonomous dump machines (10, 38) to follow a dump path (24) of said set of dump paths (24, 34, 44, 46) until said sensor arrangement parameter, determined by said sensor arrangement (22), indicates that said autonomous dump machine (10) has reached a dumping position indicative of a dumping density of said dump area (26) being within a predetermined dumping density range, said dumping position being determined in response to said sensor arrangement (22) detecting an entity (30) of previously dumped material along said dump path (24), wherein:
∘ said sensor arrangement parameter is indicative of a dump material height (32) of dump material located in front of said autonomous dump machine (10, 38), as seen along said dump path (24, 34, 44, 46), said autonomous dump machine (10) being adapted to determine that said autonomous dump machine (10) has reached said dumping position in response to determining that said dump material height (32) equals or exceeds a predetermined dump material height threshold value and/or
∘ said sensor arrangement (22) is adapted to determine an inclination of said autonomous dump machine (10), wherein said sensor arrangement (22) is adapted to detect a pitch of said autonomous dump machine (10), said autonomous dump machine (10) being adapted to determine that said autonomous dump machine (10) has reached said dumping position in response to determining that said detected pitch equals or exceeds a predetermined pitch inclination threshold angle.

2. The system (33) according to claim 1, wherein said management unit (36) is adapted to receive dump information from said autonomous dump machine (10) relating to where said autonomous dump machine (10) has dumped its load, preferably said management unit (36) is also adapted to receive shape information indicative of the shape of the load dumped by said autonomous dump machine (10), said management unit (36) further being adapted to generate a dump map (48) indicative of material currently dumped in said dump area (26) on the basis of the received information, preferably said management unit (36) is adapted to determine a set of dump paths (24, 34, 44, 46) comprising at least one dump path (24) on the basis of at least said dump map (48).

3. The system (33) according to claim 2, wherein said management unit (36) is adapted to determine a transversal dump path deviation threshold (56) for a dump path (24), said transversal dump path deviation threshold (56) being indicative of how much an autonomous dump machine (10) is allowed to transversally deviate from said dump path (24) in a direction towards an adjacent dump path (34), said management unit (36) being adapted to determine said transversal dump path deviation threshold (56) on the basis of said dump map (48), preferably said management unit (36) is adapted to set a first transversal dump path deviation threshold (56) for a dump path (24) based on a determination that said adjacent dump path (34) is at least partially filled with material, said management unit (36) being adapted to set a second transversal dump path deviation threshold (56) for a dump path (24) based on a determination that said adjacent dump path (34) is not filled with material, said first transversal dump path deviation threshold (56) being greater than said second transversal dump path deviation threshold (56).

4. The system (33) according to any one of the preceding claims, wherein said management unit (36) is adapted to split said dump area (26) into a plurality of adjacent dump paths (24, 34, 44, 46), each dump path (24, 34, 44, 46) being associated with a dump path width profile (28, 50, 52, 54) such that the plurality of dump paths (24, 34, 44, 46) covers said dump area (26) and/or wherein said dump path (24) is associated with a dump path width profile (28), said autonomous dump machine (10) being adapted to use sensor information from said sensor arrangement (22) being related to, preferably limited to, information within said dump path width profile (28).

5. The system (33) according to any one of the preceding claims, wherein said sensor arrangement (22) is adapted to detect a roll of said autonomous dump machine (10), said autonomous dump machine (10) being adapted to determine that said autonomous dump machine (10) should discontinue following said dump path (24) in response to determining that said detected roll equals or exceeds a predetermined roll inclination threshold angle.

6. An autonomous dump machine (10) comprising a sensor arrangement (22) adapted to determine at least one sensor arrangement parameter indicative of the environment adjacent to at least a portion of said autonomous dump machine (10),
wherein
said autonomous dump machine (10) is adapted to receive information relating to a dump path (24) forming part of a dump area (26) intended to be filled with dump material, said autonomous dump machine (10) being adapted to follow said dump path (24) until said sensor arrangement parameter, determined by said sensor arrangement (22), indicates that said autonomous dump machine (10) has reached a dumping position indicative of a dumping density of said dump area (26) being within a predetermined dumping density range, said autonomous dump machine (10) further being adapted to dump material carried by said autonomous dump machine (10) at said dumping position, said dumping position being determined in response to said sensor arrangement (22) detecting an entity (30) of previously dumped material along said dump path (24), wherein:
∘ said sensor arrangement parameter is indicative of a dump material height (32) of dump material located in front of said autonomous dump machine (10), said autonomous dump machine (10) being adapted to determine that said autonomous dump machine (10) has reached said dumping position in response to determining that said dump material height (32) equals or exceeds a predetermined dump material height threshold value, and/or
∘ said sensor arrangement (22) is adapted to determine an inclination of said autonomous dump machine (10), wherein said sensor arrangement (22) is adapted to detect a pitch of said autonomous dump machine, said autonomous dump machine (10) being adapted to determine that said autonomous dump machine (10) has reached said dumping position in response to determining that said detected pitch equals or exceeds a predetermined pitch inclination threshold angle,
said autonomous dump machine (10) being adapted to detect, preferably using said sensor arrangement (22), whether or not a portion of said dump area (26) located adjacent to said dump path (24), as seen in a transversal direction perpendicular to a path extension along said dump path (24), is filled with material, wherein said autonomous dump machine (10) is adapted to, in response to detecting that said portion of said dump area (26) located adjacent to said dump path (24) is filled with material, depart from the current dump path (24), as seen in said transversal direction (T), and approach said transversally adjacent and already filled portion of said dump area (26) before dumping its material..

7. The autonomous dump machine (10) according to claim 6, wherein said autonomous dump machine (10) is adapted to receive information relating to a dump path width profile (28) associated with said dump path (24), said autonomous dump machine (10) being adapted to use sensor information from said sensor arrangement (22) being related to, preferably limited to, information within said dump path width profile (28).

8. The autonomous dump machine (10) according to any one of claims 6 or 7,
wherein said sensor arrangement (22) is adapted to detect a roll of said autonomous dump machine (10), said autonomous dump machine (10) being adapted to determine that said autonomous dump machine (10) should discontinue following said dump path (24) in response to determining that said detected roll equals or exceeds a predetermined roll inclination threshold angle.

9. The autonomous dump machine (10) according to any one of claims 6 to 8,
wherein said sensor arrangement (22) comprises a LIDAR sensor and/or a RADAR sensor.

10. A method for dumping material in a dump area (26) using a system (33) comprising a management unit (36) and a plurality of autonomous dump machines (10, 38), each autonomous dump machine (10, 38) comprising a sensor arrangement (22) adapted to determine at least one sensor arrangement parameter indicative of the environment adjacent to at least a portion of said autonomous dump machine (10, 38), said method comprising using said management unit (36) for:
∘ establishing a set of dump paths (24, 34, 44, 46) , comprising at least one dump path, wherein each dump path (24) extends in said dump area (26) intended to be filled with dump material, and
∘ issuing an instruction to an autonomous dump machine (10) of said plurality of autonomous dump machines (10, 38) to follow one of said dump paths (24, 34, 44, 46) until said sensor arrangement parameter, determined by said sensor arrangement (22), indicates that said autonomous dump machine (10) has reached a dumping position indicative of a dumping density of said dump area (26) being within a predetermined dumping density range, whereby said autonomous dump machine (10) thereafter dumps material carried by said autonomous dump machine (10) at said dumping position, said dumping position being determined in response to said sensor arrangement (22) detecting an entity (30) of previously dumped material along said dump path (24), wherein:
∘ said sensor arrangement parameter is indicative of a dump material height (32) of dump material located in front of said autonomous dump machine (10, 38), said method comprising determining that said autonomous dump machine (10, 38) has reached said dumping position in response to determining that said dump material height (32) equals or exceeds a predetermined dump material height threshold value and/or
∘ said sensor arrangement (22) is adapted to determine an inclination of said autonomous dump machine (10), wherein said sensor arrangement (22) is adapted to detect a pitch of said autonomous dump machine (10), said method comprising determining that said autonomous dump machine (10, 38) has reached said dumping position in response to determining that said detected pitch equals or exceeds a predetermined pitch inclination threshold angle.

11. The method according to claim 10, further comprising receiving, by said management unit (36), dump information from said autonomous dump machine (10) relating to where said autonomous dump machine (10) has dumped its load, preferably said method further comprises receiving from said autonomous dump machine (10) shape information indicative of the shape of the load dumped by said autonomous dump machine (10), said method further comprising generating a dump map (48), using said management unit (36), indicative of material currently dumped in said dump area (26) on the basis of the received information, preferably said method further comprises determining a set of dump paths (24, 34, 44, 46) comprising at least one dump path (24, 34, 44, 46) on the basis of at least said dump map (48).

12. The method according to claim 11, further comprising determining a transversal dump path deviation threshold (56) for a dump path (24), said transversal dump path deviation threshold (56) being indicative of how much an autonomous dump machine (10) is allowed to transversally deviate from said dump path (24) in a direction towards an adjacent dump path (34), said method comprising determining said transversal dump path deviation threshold (56) on the basis of said dump map (48), said method preferably further comprising setting a first transversal dump path deviation threshold (56) for a dump path (24) based on a determination that an adjacent dump path (34) is at least partially filled with material, and setting a second transversal dump path deviation threshold (56) for a dump path (24) based on a determination that an adjacent dump path (34) is not filled with material, said first transversal dump path deviation threshold (56) being greater than said second transversal dump path deviation threshold (56).

13. The method according to any one of claims 10 - 12, comprising splitting said dump area (26) into a plurality of adjacent dump paths (24, 34, 44, 46), each dump path (24, 34, 44, 46) being associated with a path width profile (28, 50, 52, 54) such that the plurality of dump paths (24, 34, 44, 46) covers said dump area (26).

14. The method according to any one of claims 10 - 12, wherein said dump path (24) is associated with a dump path width profile (28), said method comprising using sensor information related to, preferably limited to, information within said dump path width profile (28).

## Patentansprüche

1. System (33) zum Materialabladen in einem Abladebereich (26), das System (33) umfassend eine Vielzahl von autonomen Ablademaschinen (10, 38) und eine Verwaltungseinheit (36) zum Verwalten des Materialabladens in dem Abladebereich (26) unter Verwendung der Vielzahl von autonomen Ablademaschinen (10, 38), jede autonome Ablademaschine (10, 38) umfassend eine Sensoranordnung (22), die angepasst ist, um mindestens einen Sensoranordnungsparameter zu bestimmen, der die Umgebung angrenzend an mindestens einen Abschnitt der autonomen Ablademaschine (10, 38) anzeigt, wobei die Verwaltungseinheit (36) angepasst ist zum:
o Erstellen eines Satzes von Abladepfaden (24, 34, 44, 46), umfassend mindestens einen Abladepfad (24), wobei sich jeder Abladepfad (24, 34, 44, 46) in dem Abladebereich (26) erstreckt, der dazu bestimmt ist, um mit Abladematerial gefüllt zu werden, und
o Ausgeben einer Anweisung an eine autonome Ablademaschine (10) der Vielzahl von autonomen Ablademaschinen (10, 38), einem Abladepfad (24) aus dem Satz von Abladepfaden (24, 34, 44, 46) zu folgen, bis der Sensoranordnungsparameter, der durch die Sensoranordnung (22) bestimmt wird, anzeigt, dass die autonome Ablademaschine (10) eine Abladeposition erreicht hat, die eine Abladedichte des Abladebereichs (26) anzeigt, die innerhalb eines vorbestimmten Abladedichteumfangs liegt, wobei die Abladeposition als Reaktion darauf bestimmt wird, dass die Sensoranordnung (22) eine Entität (30) von zuvor abgeladenem Material entlang des Abladepfads (24) erfasst, wobei:
o der Sensoranordnungsparameter eine Abladematerialhöhe (32) von Abladematerial anzeigt, das sich vor der autonomen Ablademaschine (10, 38) befindet, wie entlang des Abladepfads (24, 34, 44, 46) gesehen, wobei die autonome Ablademaschine (10) angepasst ist, um zu bestimmen, dass die autonome Ablademaschine (10) die Abladeposition erreicht hat, als Reaktion auf das Bestimmen, dass die Abladematerialhöhe (32) einem vorbestimmten Abladematerialhöhenschwellenwert entspricht oder diesen überschreitet und/oder
o die Sensoranordnung (22) angepasst ist, um eine Inklination der autonomen Ablademaschine (10) zu bestimmen, wobei die Sensoranordnung (22) angepasst ist, um eine Neigung der autonomen Ablademaschine (10) zu erfassen, wobei die autonome Ablademaschine (10) angepasst ist, um zu bestimmen, dass die autonome Ablademaschine (10) die Abladeposition erreicht hat, als Reaktion auf das Bestimmen, dass die erfasste Neigung einem vorbestimmten Neigungsinklinationsschwellenwinkel entspricht oder diesen überschreitet.

2. System (33) nach Anspruch 1, wobei die Verwaltungseinheit (36) angepasst ist, um Abladeinformationen von der autonomen Abladevorrichtung (10) zu empfangen, die sich darauf beziehen, wo die autonome Abladevorrichtung (10) ihre Last abgeladen hat, vorzugsweise die Verwaltungseinheit (36) ebenso angepasst ist, um Forminformationen zu empfangen, die die Form der Last anzeigen, die durch die autonome Abladevorrichtung (10) abgeladen wird, wobei die Verwaltungseinheit (36) ferner angepasst ist, um eine Abladekarte (48) zu erzeugen, die das aktuell in dem Abladebereich (26) abgeladene Material auf der Grundlage der empfangenen Informationen anzeigt, vorzugsweise die Verwaltungseinheit (36) angepasst ist, um einen Satz von Abladepfaden (24, 34, 44, 46) zu bestimmen, umfassend mindestens einen Abladepfad (24) auf der Grundlage von mindestens der Abladekarte (48).

3. System (33) nach Anspruch 2, wobei die Verwaltungseinheit (36) angepasst ist, um eine transversale Abladepfad-Abweichungsschwelle (56) für einen Abladepfad (24) zu bestimmen, wobei die transversale Abladepfad-Abweichungsschwelle (56) anzeigt, wie stark einer autonomen Ablademaschine (10) erlaubt ist, transversal von dem Abladepfad (24) in eine Richtung zu einem angrenzenden Abladepfad (34) hin abzuweichen, wobei die Verwaltungseinheit (36) angepasst ist, um die transversale Abladepfad-Abweichungsschwelle (56) auf der Grundlage der Abladekarte (48) zu bestimmen, vorzugsweise die Verwaltungseinheit (36) angepasst ist, um eine erste transversale Abladepfad-Abweichungsschwelle (56) für einen Abladepfad (24) basierend auf einer Bestimmung einzustellen, dass der angrenzende Abladepfad (34) mindestens teilweise mit Material gefüllt ist, wobei die Verwaltungseinheit (36) angepasst ist, um eine zweite transversale Abladepfad-Abweichungsschwelle (56) für einen Abladepfad (24) basierend auf einer Bestimmung einzustellen, dass der angrenzende Abladepfad (34) nicht mit Material gefüllt ist, wobei die erste transversal Abladepfad-Abweichungsschwelle (56) größer als die zweite transversale Abladepfad-Abweichungsschwelle (56) ist.

4. System (33) nach einem der vorstehenden Ansprüche, wobei die Verwaltungseinheit (36) angepasst ist, um den Abladebereich (26) in eine Vielzahl von angrenzenden Abladepfaden (24, 34, 44, 46) aufzuteilen, wobei jeder Abladepfad (24, 34, 44, 46) einem Abladepfadbreitenprofil (28, 50, 52, 54) derart zugeordnet ist, dass die Vielzahl von Abladepfaden (24, 34, 44, 46) den Abladebereich (26) abdeckt und/oder wobei der Abladepfad (24) einem Abladepfadbreitenprofil (28) zugeordnet ist, wobei die autonome Ablademaschine (10) angepasst ist, um Sensorinformationen von der Sensoranordnung (22) zu verwenden, die sich auf Informationen innerhalb des Abladepfadbreitenprofils (28) beziehen, vorzugsweise beschränkt auf diese.

5. System (33) nach einem der vorstehenden Ansprüche, wobei die Sensoranordnung (22) angepasst ist, um ein Rollen der autonomen Ablademaschine (10) zu erfassen, wobei die autonome Ablademaschine (10) angepasst ist, um zu bestimmen, dass die autonome Ablademaschine (10) das Verfolgen des Abladepfads (24) einstellen sollte, als Reaktion auf das Bestimmen, dass das erfasste Rollen einem vorbestimmten Rollinklinationsschwellenwinkel entspricht oder diesen überschreitet.

6. Autonome Ablademaschine (10), umfassend eine Sensoranordnung (22), die angepasst ist, um mindestens einen Sensoranordnungsparameter zu bestimmen, der die Umgebung angrenzend an mindestens einen Abschnitt der autonomen Ablademaschine (10) anzeigt, wobei die autonome Ablademaschine (10) angepasst ist, um Informationen bezüglich eines Abladepfads (24) zu empfangen, der einen Teil eines Abladebereichs (26) ausbildet, der dazu bestimmt ist, mit Abladematerial gefüllt zu werden, wobei die autonome Ablademaschine (10) angepasst ist, um dem Abladepfad (24) zu folgen, bis der Sensoranordnungsparameter, der durch die Sensoranordnung (22) bestimmt wird, anzeigt, dass die autonome Ablademaschine (10) eine Abladeposition erreicht hat, die eine Abladedichte des Abladebereichs (26) anzeigt, die innerhalb eines vorbestimmten Abladedichtebereichs liegt, wobei die autonome Ablademaschine (10) ferner angepasst ist, um durch die autonome Ablademaschine (10) getragenes Material an der Abladeposition abzuladen, wobei die Abladeposition als Reaktion darauf bestimmt wird, dass die Sensoranordnung (22) eine Entität (30) von zuvor abgeladenem Material entlang des Abladepfads (24) erfasst, wobei:
o der Sensoranordnungsparameter eine Abladematerialhöhe (32) von Abladematerial anzeigt, das sich vor der autonomen Ablademaschine (10) befindet, wobei die autonome Ablademaschine (10) angepasst ist, um zu bestimmen, dass die autonome Ablademaschine (10) die Abladeposition erreicht hat, als Reaktion auf das Bestimmen, dass die Abladematerialhöhe (32) einem vorbestimmten Abladematerialhöhenschwellenwert entspricht oder diesen überschreitet und/oder
o die Sensoranordnung (22) angepasst ist, um eine Inklination der autonomen Ablademaschine (10) zu bestimmen, wobei die Sensoranordnung (22) angepasst ist, um eine Neigung der autonomen Ablademaschine zu erfassen, wobei die autonome Ablademaschine (10) angepasst ist, um zu bestimmen, dass die autonome Ablademaschine (10) die Abladeposition erreicht hat, als Reaktion auf das Bestimmen, dass die erfasste Neigung einem vorbestimmten Neigungsinklinationsschwellenwinkel entspricht oder diesen überschreitet,
wobei die autonome Ablademaschine (10) angepasst ist, um vorzugsweise unter Verwendung der Sensoranordnung (22), zu erfassen, ob ein Abschnitt des Abladebereichs (26), der angrenzend an den Abladepfad (24) angeordnet ist, wie in einer Querrichtung senkrecht zu einer Pfaderstreckung entlang des Abladepfads (24) gesehen, mit Material gefüllt ist oder nicht, wobei die autonome Ablademaschine (10) angepasst ist, um als Reaktion auf das Erfassen, dass der Abschnitt des Abladebereichs (26), der angrenzend an den Abladepfad (24) angeordnet ist, mit Material gefüllt ist, von dem aktuellen Abladepfad (24) abzuweichen, wie in der Querrichtung (T) gesehen, und sich dem quer angrenzenden und bereits gefüllten Abschnitt des Abladebereichs (26) zu nähern, bevor das Material abgeladen wird.

7. Autonome Ablademaschine (10) nach Anspruch 6, wobei die autonome Ablademaschine (10) angepasst ist, um Informationen bezüglich eines Abladepfadbreitenprofils (28) zu empfangen, das dem Abladepfad (24) zugeordnet ist, wobei die autonome Ablademaschine (10) angepasst ist, um Sensorinformationen von der Sensoranordnung (22) zu verwenden, die sich auf Informationen innerhalb des Abladepfadbreitenprofils (28) beziehen, vorzugsweise beschränkt auf diese.

8. Autonome Ablademaschine (10) nach einem der Ansprüche 6 oder 7, wobei die Sensoranordnung (22) angepasst ist, um ein Rollen der autonomen Ablademaschine (10) zu erfassen, wobei die autonome Ablademaschine (10) angepasst ist, um zu bestimmen, dass die autonome Ablademaschine (10) das Verfolgen des Abladepfads (24) einstellen sollte, als Reaktion auf das Bestimmen, dass das erfasste Rollen einem vorbestimmten Rollinklinationsschwellenwinkel entspricht oder diesen überschreitet.

9. Autonome Ablademaschine (10) nach einem der Ansprüche 6 bis 8, wobei die Sensoranordnung (22) einen LIDAR-Sensor und/oder einen RADAR-Sensor umfasst.

10. Verfahren zum Abladen von Material in einem Abladebereich (26) unter Verwendung eines Systems (33), umfassend eine Verwaltungseinheit (36) und eine Vielzahl von autonomen Ablademaschinen (10, 38), jede autonome Ablademaschine (10, 38) umfassend eine Sensoranordnung (22), die angepasst ist, um mindestens einen Sensoranordnungsparameter zu bestimmen, der die Umgebung angrenzend an mindestens einen Abschnitt der autonomen Ablademaschine (10, 38) anzeigt, das Verfahren umfassend das Verwenden der Verwaltungseinheit (36) zum:
o Erstellen eines Satzes von Abladepfaden (24, 34, 44, 46), umfassend mindestens einen Abladepfad, wobei sich jeder Abladepfad (24) in dem Abladebereich (26) erstreckt, der dazu bestimmt ist, mit Abladematerial gefüllt zu werden, und
o Ausgeben einer Anweisung an eine autonome Ablademaschine (10) der Vielzahl von autonomen Ablademaschinen (10, 38), einem der Abladepfade (24, 34, 44, 46) zu folgen, bis der Sensoranordnungsparameter, der durch die Sensoranordnung (22) bestimmt wird, anzeigt, dass die autonome Ablademaschine (10) eine Abladeposition erreicht hat, die eine Abladedichte des Abladebereichs (26) anzeigt, die innerhalb eines vorbestimmten Abladedichteumfangs liegt, wodurch die autonome Ablademaschine (10) danach durch die autonome Ablademaschine (10) getragenes Material an der Abladeposition ablädt, wobei die Abladeposition als Reaktion darauf bestimmt wird, dass die Sensoranordnung (22) eine Entität (30) von zuvor abgeladenem Material entlang des Abladepfads (24) erfasst, wobei:
o der Sensoranordnungsparameter eine Abladematerialhöhe (32) von Abladematerial anzeigt, das sich vor der autonomen Ablademaschine (10, 38) befindet, das Verfahren umfassend das Bestimmen, dass die autonome Ablademaschine (10, 38) die Abladeposition erreicht hat, als Reaktion auf das Bestimmen, dass die Abladematerialhöhe (32) einem vorbestimmten Abladematerialhöhenschwellenwert entspricht oder diesen überschreitet und/oder
o die Sensoranordnung (22) angepasst ist, um eine Inklination der autonomen Ablademaschine (10) zu bestimmen, wobei die Sensoranordnung (22) angepasst ist, um eine Neigung der autonomen Ablademaschine (10) zu erfassen, das Verfahren umfassend das Bestimmen, dass die autonome Ablademaschine (10, 38) die Abladeposition erreicht hat, als Reaktion auf das Bestimmen, dass die erfasste Neigung einem vorbestimmten Neigungsinklinationsschwellenwinkel entspricht oder diesen überschreitet.

11. Verfahren nach Anspruch 10, ferner umfassend das Empfangen, durch die Verwaltungseinheit (36), von Abladeinformationen von der autonomen Abladevorrichtung (10) die sich darauf beziehen, wo die autonome Abladevorrichtung (10) ihre Last abgeladen hat, vorzugsweise das Verfahren ferner das Empfangen von Forminformationen von der autonomen Abladevorrichtung (10) umfasst, die die Form der Last anzeigen, die durch die autonome Abladevorrichtung (10) abgeladen wird, das Verfahren ferner umfassend das Erzeugen einer Abladekarte (48) unter Verwendung der Verwaltungseinheit (36), die das aktuell in dem Abladebereich (26) abgeladene Material auf der Grundlage der empfangenen Informationen anzeigt, vorzugsweise das Verfahren ferner das Bestimmen eines Satzes von Abladepfaden (24, 34, 44, 46) umfasst, umfassend mindestens einen Abladepfad (24, 34, 44, 46) auf der Grundlage von mindestens der Abladekarte (48).

12. Verfahren nach Anspruch 11, ferner umfassend das Bestimmen einer transversalen Abladepfad-Abweichungsschwelle (56) für einen Abladepfad (24), wobei die transversale Abladepfad-Abweichungsschwelle (56) anzeigt, wie stark einer autonomen Ablademaschine (10) erlaubt ist, transversal von dem Abladepfad (24) in eine Richtung zu einem angrenzenden Abladepfad (34) hin abzuweichen, das Verfahren umfassend das Bestimmen der transversalen Abladepfad-Abweichungsschwelle (56) auf der Grundlage der Abladekarte (48), das Verfahren vorzugsweise ferner umfassend das Einstellen einer ersten transversalen Abladepfad-Abweichungsschwelle (56) für einen Abladepfad (24) basierend auf einer Bestimmung, dass ein angrenzender Abladepfad (34) mindestens teilweise mit Material gefüllt ist, und das Einstellen einer zweiten transversalen Abladepfad-Abweichungsschwelle (56) für einen Abladepfad (24) basierend auf einer Bestimmung, dass der angrenzende Abladepfad (34) nicht mit Material gefüllt ist, wobei die erste transversal Abladepfad-Abweichungsschwelle (56) größer als die zweite transversale Abladepfad-Abweichungsschwelle (56) ist.

13. Verfahren nach einem der Ansprüche 10 bis 12, umfassend das Aufteilen des Abladebereichs (26) in eine Vielzahl von angrenzenden Abladepfaden (24, 34, 44, 46), wobei jeder Abladepfad (24, 34, 44, 46) einem Pfadbreitenprofil (28, 50, 52, 54) derart zugeordnet ist, dass die Vielzahl von Abladepfaden (24, 34, 44, 46) den Abladebereich (26) abdeckt.

14. Verfahren nach einem der Ansprüche 10 bis 12, wobei der Abladepfad (24) einem Abladepfadbreitenprofil (28) zugeordnet ist, das Verfahren umfassend das Verwenden von Sensorinformationen, die sich auf Informationen innerhalb des Abladepfadbreitenprofiles (28) beziehen, vorzugsweise beschränkt auf diese.

## Revendications

1. Système (33) permettant le déversement de matériau dans une zone de déversement (26), ledit système (33) comprenant une pluralité de machines de déversement autonomes (10, 38) et une unité de gestion (36) permettant de gérer le déversement de matériau dans ladite zone de déversement (26) à l'aide de ladite pluralité de machines de déversement autonomes (10, 38), chaque machine de déversement autonome (10, 38) comprenant un agencement de capteur (22) conçu pour déterminer au moins un paramètre d'agencement de capteur indiquant l'environnement adjacent à au moins une partie de ladite machine de déversement autonome (10, 38), dans lequel ladite unité de gestion (36) est conçue pour :
∘ établir un ensemble de trajets de déversement (24, 34, 44, 46), comprenant au moins un trajet de déversement (24), dans lequel chaque trajet de déversement (24, 34, 44, 46) s'étend dans ladite zone de déversement (26) prévue pour être remplie avec un matériau de déversement, et
∘ délivrer une instruction à une machine de déversement autonome (10) de ladite pluralité de machines de déversement autonomes (10, 38) pour suivre un trajet de déversement (24) dudit ensemble de trajets de déversement (24, 34, 44, 46) jusqu'à ce que ledit paramètre d'agencement de capteur, déterminé par ledit agencement de capteur (22), indique que ladite machine de déversement autonome (10) a atteint une position de déversement indiquant qu'une densité de déversement de ladite zone de déversement (26) est au sein d'une plage prédéterminée de densité de déversement, ladite position de déversement étant déterminée en réponse audit agencement de capteur (22) détectant une entité (30) de matériau précédemment déversé le long dudit trajet de déversement (24), dans lequel :
∘ ledit paramètre d'agencement de capteur indique une hauteur de matériau de déversement (32) d'un matériau de déversement localisé à l'avant de ladite machine de déversement autonome (10, 38), comme on l'observe le long dudit trajet de déversement (24, 34, 44, 46), ladite machine de déversement autonome (10) étant conçue pour déterminer que ladite machine de déversement autonome (10) a atteint ladite position de déversement en réponse à la détermination que ladite hauteur de matériau de déversement (32) égale ou dépasse une valeur seuil prédéterminée de hauteur de matériau de déversement et/ou
∘ ledit agencement de capteur (22) est conçu pour déterminer une inclinaison de ladite machine de déversement autonome (10), dans lequel ledit agencement de capteur (22) est conçu pour détecter un tangage de ladite machine de déversement autonome (10), ladite machine de déversement autonome (10) étant conçue pour déterminer que ladite machine de déversement autonome (10) a atteint ladite position de déversement en réponse à la détermination que ledit tangage détecté égale ou dépasse un angle seuil d'inclinaison de tangage prédéterminé.

2. Système (33) selon la revendication 1, dans lequel ladite unité de gestion (36) est conçue pour recevoir des informations de déversement en provenance de ladite machine de déversement autonome (10) se rapportant à l'endroit où ladite machine de déversement autonome (10) a déversé sa charge, de préférence ladite unité de gestion (36) est également conçue pour recevoir des informations de forme indiquant la forme de la charge déversée par ladite machine de déversement autonome (10), ladite unité de gestion (36) étant conçue en outre pour générer une carte de déversement (48) indiquant un matériau actuellement déversé dans ladite zone de déversement (26) en fonction des informations reçues, de préférence ladite unité de gestion (36) est conçue pour déterminer un ensemble de trajets de déversement (24, 34, 44, 46) comprenant au moins un trajet de déversement (24) en fonction au moins de ladite carte de déversement (48).

3. Système (33) selon la revendication 2, dans lequel ladite unité de gestion (36) est conçue pour déterminer un seuil de déviation transversale de trajet de déversement (56) pour un trajet de déversement (24), ledit seuil de déviation transversale de trajet de déversement (56) indiquant dans quelle mesure une machine de déversement autonome (10) est autorisée à dévier transversalement par rapport audit trajet de déversement (24) dans une direction allant vers un trajet de déversement adjacent (34), ladite unité de gestion (36) étant conçue pour déterminer ledit seuil de déviation transversale de trajet de déversement (56) en fonction de ladite carte de déversement (48), de préférence ladite unité de gestion (36) est conçue pour définir un premier seuil de déviation transversale de trajet de déversement (56) pour un trajet de déversement (24) en fonction d'une détermination que ledit trajet de déversement adjacent (34) est au moins partiellement rempli de matériau, ladite unité de gestion (36) étant conçue pour définir un second seuil de déviation transversale de trajet de déversement (56) pour un trajet de déversement (24) en fonction d'une détermination que ledit trajet de déversement adjacent (34) n'est pas rempli de matériau, ledit premier seuil de déviation transversale de trajet de déversement (56) étant supérieur audit second seuil de déviation transversale de trajet de déversement (56).

4. Système (33) selon l'une quelconque des revendications précédentes, dans lequel ladite unité de gestion (36) est conçue pour diviser ladite zone de déversement (26) en une pluralité de trajets de déversement adjacents (24, 34, 44, 46), chaque trajet de déversement (24, 34, 44, 46) étant associé à un profil de largeur de trajet de déversement (28, 50, 52, 54) de telle sorte que la pluralité de trajets de déversement (24, 34, 44, 46) couvre ladite zone de déversement (26) et/ou dans lequel ledit trajet de déversement (24) est associé à un profil de largeur de trajet de déversement (28), ladite machine de déversement autonome (10) étant conçue pour utiliser des informations de capteur provenant dudit agencement de capteur (22) se rapportant à, de préférence étant limitées à, des informations au sein dudit profil de largeur de trajet de déversement (28).

5. Système (33) selon l'une quelconque des revendications précédentes, dans lequel ledit agencement de capteur (22) est conçu pour détecter un roulis de ladite machine de déversement autonome (10), ladite machine de déversement autonome (10) étant conçue pour déterminer que ladite machine de déversement autonome (10) doit arrêter de suivre ledit trajet de déversement (24) en réponse à la détermination que ledit roulis détecté égale ou dépasse un angle seuil d'inclinaison de roulis prédéterminé.

6. Machine de déversement autonome (10) comprenant un agencement de capteur (22) conçu pour déterminer au moins un paramètre d'agencement de capteur indiquant l'environnement adjacent à au moins une partie de ladite machine de déversement autonome (10), dans laquelle ladite machine de déversement autonome (10) est conçue pour recevoir des informations se rapportant à un trajet de déversement (24) faisant partie d'une zone de déversement (26) prévue pour être remplie de matériau de déversement, ladite machine de déversement autonome (10) étant conçue pour suivre ledit trajet de déversement (24) jusqu'à ce que ledit paramètre d'agencement de capteur, déterminé par ledit agencement de capteur (22), indique que ladite machine de déversement autonome (10) a atteint une position de déversement indiquant qu'une densité de déversement de ladite zone de déversement (26) est au sein d'une plage prédéterminée de densité de déversement, ladite machine de déversement autonome (10) étant conçue en outre pour déverser un matériau transporté par ladite machine de déversement autonome (10) au niveau de ladite position de déversement, ladite position de déversement étant déterminée en réponse audit agencement de capteur (22) détectant une entité (30) de matériau précédemment déversé le long dudit trajet de déversement (24), dans laquelle :
∘ ledit paramètre d'agencement de capteur indique une hauteur de matériau de déversement (32) de matériau de déversement localisé à l'avant de ladite machine de déversement autonome (10), ladite machine de déversement autonome (10) étant conçue pour déterminer que ladite machine de déversement autonome (10) a atteint ladite position de déversement en réponse à la détermination que ladite hauteur de matériau de déversement (32) égale ou dépasse une valeur seuil prédéterminée de hauteur de matériau de déversement, et/ou
∘ ledit agencement de capteur (22) est conçu pour déterminer une inclinaison de ladite machine de déversement autonome (10), dans laquelle ledit agencement de capteur (22) est conçu pour détecter un tangage de ladite machine de déversement autonome, ladite machine de déversement autonome (10) étant conçue pour déterminer que ladite machine de déversement autonome (10) a atteint ladite position de déversement en réponse à la détermination que ledit tangage détecté égale ou dépasse un angle seuil d'inclinaison de tangage prédéterminé,
ladite machine de déversement autonome (10) étant conçue pour détecter, de préférence à l'aide dudit agencement de capteur (22), si une partie de ladite zone de déversement (26) localisée adjacente audit trajet de déversement (24), comme on l'observe dans une direction transversale perpendiculaire à une extension de trajet le long dudit trajet de déversement (24), est ou non remplie de matériau, dans laquelle ladite machine de déversement autonome (10) est conçue pour, en réponse à la détection que ladite partie de ladite zone de déversement (26) localisée adjacente audit trajet de déversement (24) est remplie de matériau, quitter le trajet de déversement actuel (24), comme on l'observe dans ladite direction transversale (T), et se rapprocher de ladite partie transversalement adjacente et déjà remplie de ladite zone de déversement (26) avant déversement de son matériau.

7. Machine de déversement autonome (10) selon la revendication 6, dans laquelle ladite machine de déversement autonome (10) est conçue pour recevoir des informations se rapportant à un profil de largeur de trajet de déversement (28) associées audit trajet de déversement (24), ladite machine de déversement autonome (10) étant conçue pour utiliser des informations de capteur provenant dudit agencement de capteur (22) se rapportant à, de préférence étant limitées à, des informations au sein dudit profil de largeur de trajet de déversement (28).

8. Machine de déversement autonome (10) selon l'une quelconque des revendications 6 ou 7, dans laquelle ledit agencement de capteur (22) est conçu pour détecter un roulis de ladite machine de déversement autonome (10), ladite machine de déversement autonome (10) étant conçue pour déterminer que ladite machine de déversement autonome (10) doit arrêter de suivre ledit trajet de déversement (24) en réponse à la détermination que ledit roulis détecté égale ou dépasse un angle seuil d'inclinaison de roulis prédéterminé.

9. Machine de déversement autonome (10) selon l'une quelconque des revendications 6 à 8, dans laquelle ledit agencement de capteur (22) comprend un capteur LIDAR et/ou un capteur RADAR.

10. Procédé permettant de déverser un matériau dans une zone de déversement (26) à l'aide d'un système (33) comprenant une unité de gestion (36) et une pluralité de machines de déversement autonomes (10, 38), chaque machine de déversement autonome (10, 38) comprenant un agencement de capteur (22) conçu pour déterminer au moins un paramètre d'agencement de capteur indiquant l'environnement adjacent à au moins une partie de ladite machine de déversement autonome (10, 38), ledit procédé comprenant l'utilisation de ladite unité de gestion (36) pour :
o l'établissement d'un ensemble de trajets de déversement (24, 34, 44, 46), comprenant au moins un trajet de déversement, dans lequel chaque trajet de déversement (24) s'étend dans ladite zone de déversement (26) prévue pour être remplie avec un matériau de déversement, et
o la délivrance d'une instruction à une machine de déversement autonome (10) de ladite pluralité de machines de déversement autonomes (10, 38) pour suivre l'un desdits trajets de déversement (24, 34, 44, 46) jusqu'à ce que ledit paramètre d'agencement de capteur, déterminé par ledit agencement de capteur (22), indique que ladite machine de déversement autonome (10) a atteint une position de déversement indiquant qu'une densité de déversement de ladite zone de déversement (26) est au sein d'une plage prédéterminée de densité de déversement, moyennant quoi ladite machine de déversement autonome (10) déverse par la suite un matériau transporté par ladite machine de déversement autonome (10) au niveau de ladite position de déversement, ladite position de déversement étant déterminée en réponse audit agencement de capteur (22) détectant une entité (30) de matériau précédemment déversé le long dudit trajet de déversement (24), dans lequel :
∘ ledit paramètre d'agencement de capteur indique une hauteur de matériau de déversement (32) d'un matériau de déversement localisé à l'avant de ladite machine de déversement autonome (10, 38), ledit procédé comprenant la détermination que ladite machine de déversement autonome (10, 38) a atteint ladite position de déversement en réponse à la détermination que ladite hauteur de matériau de déversement (32) égale ou dépasse une valeur seuil prédéterminée de hauteur de matériau de déversement et/ou
∘ ledit agencement de capteur (22) est conçu pour déterminer une inclinaison de ladite machine de déversement autonome (10), dans lequel ledit agencement de capteur (22) est conçu pour détecter un tangage de ladite machine de déversement autonome (10), ledit procédé comprenant la détermination que ladite machine de déversement autonome (10, 38) a atteint ladite position de déversement en réponse à la détermination que ledit tangage détecté égale ou dépasse un angle seuil d'inclinaison de tangage prédéterminé.

11. Procédé selon la revendication 10, comprenant en outre la réception, par ladite unité de gestion (36), des informations de déversement en provenance de ladite machine de déversement autonome (10) se rapportant à l'endroit où ladite machine de déversement autonome (10) a déversé sa charge, de préférence ledit procédé comprend en outre la réception en provenance de ladite machine de déversement autonome (10) d'informations de forme indiquant la forme de la charge déversée par ladite machine de déversement autonome (10), ledit procédé comprenant en outre la génération d'une carte de déversement (48), à l'aide de ladite unité de gestion (36), indiquant un matériau actuellement déversé dans ladite zone de déversement (26) en fonction des informations reçues, de préférence ledit procédé comprend en outre la détermination d'un ensemble de trajets de déversement (24, 34, 44, 46) comprenant au moins un trajet de déversement (24, 34, 44, 46) en fonction au moins de ladite carte de déversement (48).

12. Procédé selon la revendication 11, comprenant en outre la détermination d'un seuil de déviation transversale de trajet de déversement (56) pour un trajet de déversement (24), ledit seuil de déviation transversale de trajet de déversement (56) indiquant dans quelle mesure une machine de déversement autonome (10) est autorisée à dévier transversalement par rapport audit trajet de déversement (24) dans une direction allant vers un trajet de déversement adjacent (34), ledit procédé comprenant détermination dudit seuil de déviation transversale de trajet de déversement (56) en fonction de ladite carte de déversement (48), ledit procédé comprenant en outre de préférence la définition d'un premier seuil de déviation transversale de trajet de déversement (56) pour un trajet de déversement (24) en fonction d'une détermination qu'un trajet de déversement adjacent (34) est au moins partiellement rempli de matériau, et la définition d'un second seuil de déviation transversale de trajet de déversement (56) pour un trajet de déversement (24) en fonction d'une détermination qu'un trajet de déversement adjacent (34) n'est pas rempli de matériau, ledit premier seuil de déviation transversale de trajet de déversement (56) étant supérieur audit second seuil de déviation transversale de trajet de déversement (56).

13. Procédé selon l'une quelconque des revendications 10 à 12, comprenant la division de ladite zone de déversement (26) en une pluralité de trajets de déversement adjacents (24, 34, 44, 46), chaque trajet de déversement (24, 34, 44, 46) étant associé à un profil de largeur de trajet (28, 50, 52, 54) de telle sorte que la pluralité de trajets de déversement (24, 34, 44, 46) couvre ladite zone de déversement (26).

14. Procédé selon l'une quelconque des revendications 10 à 12, dans lequel ledit trajet de déversement (24) est associé à un profil de largeur de trajet de déversement (28), ledit procédé comprenant l'utilisation d'informations de capteur se rapportant à, de préférence étant limitées à, des informations au sein dudit profil de largeur de trajet de déversement (28).
